# EUROPÄISCHE PATENTSCHRIFT

(11) **EP 3 368 265 B1**
(45) Veröffentlichungstag und Bekanntmachung des Hinweises auf die Patenterteilung: **28.04.2021**
(21) Anmeldenummer: 16784847.2
(22) Anmeldetag: 18.10.2016
(51) Int. Cl.: B29B 7/74, B29C 43/30, B29C 43/24, B29B 9/16, B29B 7/38, B29B 7/52, B29B 9/04, B29C 48/08, B29C 48/56, B29C 48/62, B29L 31/00

(54) **VERFAHREN ZUR HERSTELLUNG EINES GEMUSTERTEN BODENBELAGS**
METHOD FOR MANUFACTURING A PATTERNED FLOOR COVERING
PROCÉDÉ DE FABRICATION D'UN REVÊTEMENT DE SOL À MOTIF

(30) Priorität: 30.10.2015 DE 102015118618
(43) Veröffentlichungstag der Anmeldung: 05.09.2018
(73) Patentinhaber: nora systems GmbH, 69469 Weinheim (DE)
(72) Erfinder: KRÖGER, Mario, 76646 Bruchsal (DE); RISCHER, Dieter, 69518 Abtsteinach (DE)
(74) Vertreter: Reiser & Partner Patentanwälte mbB
(86) Internationale Anmeldenummer: PCT/EP2016/074939
(87) Internationale Veröffentlichungsnummer: WO 2017/071987

(56) Entgegenhaltungen:
- EP-A1- 1 176 246
- EP-A1- 1 616 923
- EP-A2- 0 839 948
- EP-A2- 2 759 636
- DE-A1- 4 407 989
- DE-C1- 4 405 589
- DE-C1- 19 507 113

## Beschreibung

Die vorliegende Erfindung betrifft ein Verfahren zur Herstellung eines gemusterten Bodenbelags.

Aus der DE 195 07 113 C1 ist ein Verfahren zur Herstellung eines moiriert gemusterten Bodenbelags aus Gummi bekannt. Das vorbekannte Verfahren sieht vor, dass der Bodenbelag aus zwei oder drei Grundfarben aufgebaut wird. Dabei wird ein Schnecken-Kurzextruder mit zwei oder drei verschiedenfarbigen Streifen aus vulkanisierbarem Elastomermaterial beschickt. Das Elastomermaterial wird dabei ohne farbliche Durchmischung durch den Extruder gefördert, durch eine Lochscheibe extrudiert und zu Formstücken von jeweils 1 bis 2 mm abgeschlagen. Die Formstücke werden dann in einem Zweiwalzenkalander zu einer Materialbahn verdichtet und dann vulkanisiert.

Die EP 2 759 636 A2 beschreibt einen marmorierten Bodenbelag auf Linoleum-Basis. Bei der Herstellung werden zunächst Linoleumgranulate verschiedener Farben hergestellt. Die Granulate werden mit einem thermoplastischen Bindemittel imprägniert und gepresst, um einen marmorierten Bodenbelag zu erhalten.

Die DE 1 479 605 beschreibt ein Verfahren zur Herstellung von marmorierten Bahnen aus thermoplastischen Kunststoffen. Hierbei werden verschieden eingefärbte Kunststoffmischungen dem oberen und unteren Einzugsspalt eines Sechswalzenkalanders zugeführt. Danach durchläuft das Material einen weiteren Walzenspalt. Durch die Stauung der Walzen werden die verschiedenfarbigen Bahnen miteinander vermischt.

Die EP 1 616 923 A1 beschreibt ein Verfahren zur Herstellung eines Bodenbelags, bei dem drei einfarbige Kautschukbahnen granuliert und dann kalandriert werden, um eine Bahn zu erzeugen. Diese Bahn wird dann erneut granuliert, bevor das Material in einer doppelten Bandpresse zu einer mehrfarbigen marmorierten Bahn geformt wird.

Die EP 0 839 948 A2 beschreibt ein Flächengebilde aus Natur- und/oder Kunststoffen mit vorbestimmter Musterung. Die Musterung wird dabei durch einen Farbstoff oder ein Pigment erreicht, das seine Farbe durch Bestrahlung erlangt oder verändert.

Es hat sich gezeigt, dass die vorbekannten Verfahren noch nicht zu einer optimalen optischen Gestaltung des Bodenbelages führen.

Die Erfindung stellt sich daher die Aufgabe, ein Verfahren anzugeben, das die Herstellung eines stabilen gemusterten Bodenbelages und insbesondere eines marmorierten Bodenbelages ermöglicht, der eine besonders ansprechende Oberflächengestaltung aufweist.

Die erfindungsgemäße Aufgabe wird bei einem Verfahren mit den Merkmalen von Anspruch 1 gelöst. Demnach weist das Verfahren zur Herstellung eines gemusterten Bodenbelags folgende Schritte auf:
- Bereitstellen einer ersten Komponente und einer zweiten Komponente, wobei die erste und zweite Komponente mischbar sind und wobei die erste Komponente eine erste Grundfarbe und die zweite Komponente eine zweite Grundfarbe aufweist;
- Herstellen eines (ersten) Zwischenproduktes durch Mischen der ersten Komponente und der zweiten Komponente in einer (ersten) Mischeinrichtung, wobei das Mischen derart erfolgt, dass das (erste) Zwischenprodukt erste Bereiche mit der ersten Grundfarbe, zweite Bereiche mit der zweiten Grundfarbe und dritte Bereiche mit einer ersten Mischfarbe aufweist;
- Bereitstellen einer dritten Komponente;
- Weiterverarbeiten des (ersten) Zwischenproduktes zu einem bahnförmigen Bodenbelag,
wobei beim Weiterverarbeiten des (ersten) Zwischenproduktes zunächst ein zweites Zwischenprodukt hergestellt wird durch Mischen des (ersten) Zwischenproduktes mit der dritten Komponente in einer zweiten Mischeinrichtung, wobei das zweite Zwischenprodukt erste Bereiche mit der ersten Grundfarbe, zweite Bereiche mit der zweiten Grundfarbe, dritte Bereiche mit der ersten Mischfarbe und vierte Bereiche mit einer zweiten Mischfarbe aufweist.

Dieses Verfahren ermöglicht die Herstellung eines stabilen und verschleißresistenten Bodenbelags, der eine besonders ansprechende Oberflächengestaltung aufweist. Insbesondere eignet sich das Verfahren zur Herstellung von Bodenbelägen mit einem marmorierten Erscheinungsbild oder einem moirierten Erscheinungsbild. Hierzu trägt bei, wenn die erste und die zweite Grundfarbe verschieden sind. Insbesondere kann der Farbton und/oder die Helligkeit der ersten und zweiten Grundfarbe verschieden sein. Dabei kann eine Gestaltung erreicht werden, bei der Verschmutzungen und Verschleiß nur wenig sichtbar sind. Das Mischen erfolgt derart, dass die Komponenten nicht vollständig durchmischt werden. Dementsprechend sind an dem fertigen Bodenbelag die unterschiedlichen Farbabstufungen der unterschiedlichen ersten und zweiten Grundfarbe erkennbar. Ein Teil der Komponenten wird hingegen so durchmischt, dass auch Mischfarben entstehen. Auf diese Weise ergibt sich trotz Verwendung einer begrenzten Anzahl von Grundfarben in dem Bodenbelag eine Anzahl von Bereichen mit einer feinen Farbabstufung. Das Verfahren eignet sich besonders für die Herstellung von Elastomer-Bodenbelägen.

Nachfolgend wird auf das erste Zwischenprodukt auch kurz als *das Zwischenprodukt* Bezug genommen.

In vorteilhafter Weise ist vorgesehen, dass beim Herstellen des Zwischenproduktes eine Menge A der ersten Komponente und eine Menge B der zweiten Komponente zugegeben wird, wobei die Menge A zwischen 50 Vol % und 150 Vol % der Menge B ausmacht. Vorzugsweise macht die Menge A zwischen 80 Vol % und 120 Vol % der Menge B aus. Dies trägt zu einer optisch ansprechenden Musterung des Bodenbelags, insbesondere einer fein abgestuften Marmorierung, bei.

Eine bevorzugte Ausgestaltung der Erfindung sieht vor, dass in dem Zwischenprodukt die dritten Bereiche mit der ersten Mischfarbe zwischen 30 Vol % und 50 Vol % ausmachen. Dies trägt zu einer optisch ansprechenden Musterung des Bodenbelags, insbesondere einer Marmorierung, bei.

Eine vorteilhafte Ausgestaltung der Erfindung sieht vor, dass das Zwischenprodukt nach dem Mischen in einem Granulator granuliert wird. Beim Weiterverarbeiten, insbesondere beim unten beschriebenen Herstellen des zweiten Zwischenproduktes, wird das granulierte Zwischenprodukt verwendet. Dies trägt zu einer optisch ansprechenden Musterung des Bodenbelags, insbesondere einer fein abgestuften Marmorierung, bei. Durch das Granulat kann insbesondere eine besonders fein abgestufte Marmorierung erreicht werden. Zudem kann das Granulat gut weiterverarbeitet oder auch zwischengelagert werden. Für die Herstellung des Granulats kann das Zwischenprodukt beispielsweise zunächst als Streifen extrudiert werden, wobei der Streifen mit Messern zerkleinert und dann einem Sieb zugeführt wird. Die Maschenweite des Siebes stellt sicher, dass nur Granulat mit der gewünschten Größe das Sieb verlassen kann. Vorzugsweise liegt der mittlere Siebdurchmesser des Granulats bei weniger als 10 mm. Eine weitere Verbesserung sieht vor, dass beim Herstellen des unten beschriebenen zweiten Zwischenprodukts das Zwischenprodukt als Granulat und eine dritte Komponente als Streifen in eine zweite Mischeinrichtung gegeben werden. Diese Maßnahmen tragen zu einer optisch ansprechenden Musterung des Bodenbelags, insbesondere einer fein abgestuften Marmorierung, bei.

Die Erfindung sieht weiterhin vor, dass eine dritte Komponente bereitgestellt wird und dass beim Weiterverarbeiten zu einem bahnförmigen Bodenbelag zunächst ein zweites Zwischenprodukt hergestellt wird durch Mischen des Zwischenproduktes mit der dritten Komponente in einer zweiten Mischeinrichtung, wobei das zweite Zwischenprodukt erste Bereiche mit der ersten Grundfarbe, zweite Bereiche mit der zweiten Grundfarbe, dritte Bereiche mit der ersten Mischfarbe und vierte Bereiche mit einer zweiten Mischfarbe aufweist. Das zweite Zwischenprodukt wird dann zu dem bahnförmigen Bodenbelag weiterverarbeitet. Diese Maßnahmen tragen zu einer optisch ansprechenden Musterung des Bodenbelags, insbesondere einer fein abgestuften Marmorierung, bei. Durch die mehrstufige Herstellung mit dem Zwischenprodukt und dem zweiten Zwischenprodukt kann ein Bodenbelag erhalten werden, der neben den Grundfarben auch mehrere Mischfarben in besonders feiner Verteilung enthält.

Eine besonders vorteilhafte Ausgestaltung der Erfindung sieht vor, dass die dritte Komponente eine dritte Grundfarbe aufweist. Vorzugsweise stimmt dabei die dritte Grundfarbe mit der ersten Grundfarbe überein. Dies trägt zu einer vorteilhaften optischen Gestaltung bei. Besonders bevorzugt kann die dritte Komponente dieselbe Zusammensetzung wie die erste Komponente aufweisen.

Eine vorteilhafte Ausgestaltung sieht vor, dass beim Herstellen des zweiten Zwischenproduktes eine Menge C der dritten Komponente mit einer Menge D des Zwischenproduktes zugegeben wird, wobei die Menge C zwischen 150 Vol % und 250 Vol % der Menge D ausmacht. Vorzugsweise macht die Menge C zwischen 180 Vol % und 220 Vol % der Menge D aus. Dies trägt zu einer optisch ansprechenden Musterung des Bodenbelags, insbesondere einer fein abgestuften Marmorierung, bei.

Erfindungsgemäß ist besonders bevorzugt, dass in dem zweiten Zwischenprodukt die vierten Bereiche mit der zweiten Mischfarbe zwischen 30 Vol % und 70 Vol % ausmachen. Dies trägt zu einer optisch ansprechenden Musterung des Bodenbelags, insbesondere einer fein abgestuften Marmorierung, bei.

Vorzugsweise machen in dem zweiten Zwischenprodukt die ersten Bereiche mit der ersten Grundfarbe zwischen 20 Vol % und 40 Vol % aus. Dies trägt zu einer optisch ansprechenden Musterung des Bodenbelags, insbesondere einer fein abgestuften Marmorierung bei.

In vorteilhafter Weise ist vorgesehen, dass wenigstens eine weitere Komponente mit wenigstens einer weiteren Grundfarbe bereitgestellt wird, wobei beim Herstellen des Zwischenproduktes und/oder beim Herstellen des zweiten Zwischenproduktes durch Mischen zusätzlich die weitere Komponente zugegeben wird. Auf diese Weise können in dem Zwischenprodukt bzw. dem zweiten Zwischenprodukt Bereiche mit der weiteren Grundfarbe (bzw. den weiteren Grundfarben) erhalten werden. Vorzugsweise wird die weitere Komponente beim Herstellen des Zwischenproduktes zugegeben. Insbesondere ist die weitere Grundfarbe von der ersten und zweiten Grundfarbe verschieden. Diese Gestaltung trägt zu einer weiter verbesserten optischen Gestaltung des Bodenbelags bei. Insbesondere werden dadurch besonders feine Farbabstufungen ermöglicht, die eine ansprechende Marmorierung ermöglichen. Erfindungsgemäß ist bevorzugt, eine weitere Komponente vorzusehen. Mit der ersten und zweiten Grundfarbe sowie der weiteren Grundfarbe liegen somit insgesamt drei Grundfarben vor, die zusammen mit der Mischfarbe bzw. den Mischfarben eine fein abgestufte Gestaltung, insbesondere eine feine Marmorierung des Erscheinungsbildes ermöglichen.

Eine vorteilhafte Ausgestaltung der Erfindung sieht vor, dass die zweite Grundfarbe dunkler ist als die erste Grundfarbe. Vorzugsweise ist, wenn eine weitere Komponente verwendet wird, die weitere Grundfarbe heller als die erste Grundfarbe. Dies trägt zu einem vorteilhaften optischen Erscheinungsbild des Bodenbelags bei und ermöglicht insbesondere eine abgestufte Marmorierung.

Eine weitere Verbesserung des optischen Erscheinungsbildes wird dann erreicht, wenn der Farbabstand dE zwischen der ersten Grundfarbe und der zweiten Mischfarbe zwischen 1,0 und 5,0 liegt. Vorzugsweise liegt der Farbabstand dE zwischen 1,4 und 3,0 und besonders bevorzugt zwischen 1,9 und 2,5. Der Farbabstand kann nach DIN 6176 in der zum 1. September 2015 gültigen Fassung ermittelt werden.

Erfindungsgemäß ist bevorzugt, dass die erste und die zweite Komponente als Streifen in die Mischeinrichtung gegeben werden. Die ggf. verwendeten weitere(n) Komponenten können gleichfalls als Streifen in die Mischeinrichtung gegeben werden.

Eine besonders bevorzugte Ausgestaltung der Erfindung sieht vor, dass die Mischeinrichtung und/oder die zweite Mischeinrichtung als Extruder ausgebildet sind. Die Extruder ermöglichen in vorteilhafter Weise die gewünschte teilweise Durchmischung, welche zu einer optisch ansprechenden Musterung des Bodenbelags, insbesondere einer fein abgestuften Marmorierung, beiträgt. Die Mischeinrichtung und die zweite Mischeinrichtung können dabei identisch oder unterschiedlich sein. Bei diskontinuierlicher Herstellung kann dieselbe Vorrichtung einmal als Mischeinrichtung und einmal als zweite Mischeinrichtung verwendet werden. Besser ist es aber, wenn die Mischeinrichtung und die zweite Mischeinrichtung separate Vorrichtungen sind.

In vorteilhafter Weise ist der Extruder als Stiftextruder ausgebildet. Ein Stiftextruder ermöglicht, die gewünschte teilweise Durchmischung durchzuführen, welche zu einer fein abgestuften Marmorierung führt. Die Stifte des Stiftextruders ragen in den durch die Extruderschnecke gebildeten Ringraum und führen dazu, dass die Komponenten bei Ihrem Durchlauf durch den Extruder in der gewünschten Weise teilweise durchmischt werden. Der Extruder kann insbesondere als Schnecken-Kurzextruder ausgebildet sein und ein Längen-/Durchmesserverhältnis zwischen 4:1 und 10:1 aufweisen.

Eine weitere Verbesserung wird dann erreicht, wenn das zweite Zwischenprodukt als Chips vorliegt. Chips können durch Abschlagen nach der zweiten Mischeinrichtung hergestellt werden. Hierzu kann das zweite Zwischenprodukt durch eine Lochscheibe extrudiert und dann in kurzen Abständen abgeschlagen werden. Dies trägt zu einer optisch ansprechenden Musterung des Bodenbelags, insbesondere einer fein abgestuften Marmorierung, bei.

Eine bevorzugte Ausführungsform der Erfindung sieht vor, dass das Weiterverarbeiten zu einem bahnförmigen Bodenbelag ein Kalandrieren in einer Kalanderanlage umfasst. Auch dies trägt zu einer optisch ansprechenden Musterung des Bodenbelags, insbesondere einer fein abgestuften Marmorierung, bei. Durch das Kalandrieren kann eine die Marmorierung des Erscheinungsbildes unterstützende Verformung des Materials erreicht werden. Vorzugsweise ergibt sich hierbei eine Richtungsorientierung der Musterung. Zudem kann mit der Kalandrierung das (zweite) Zwischenprodukt effizient umgeformt werden, wobei die Anzahl von Luftblasen gering gehalten wird.

Eine vorteilhafte Ausgestaltung der Erfindung sieht vor, dass die Kalanderanlage ein Kalanderwalzenpaar mit einer ersten und einer zweiten Kalanderwalze aufweist, wobei die erste Kalanderwalze mit einer ersten Umfangsgeschwindigkeit V1 und die zweite Kalanderwalze mit einer zweiten Umfangsgeschwindigkeit V2 bewegt wird, und dass die erste Umfangsgeschwindigkeit V1 mehr als 110% der zweiten Umfangsgeschwindigkeit V2 beträgt. Vorzugsweise beträgt die erste Umfangsgeschwindigkeit V1 mehr als 130% der zweiten Umfangsgeschwindigkeit V2. Dabei ist bevorzugt, wenn die erste Umfangsgeschwindigkeit V1 weniger als 170 % der zweiten Umfangsgeschwindigkeit V2 beträgt. Durch die unterschiedlichen Umfangsgeschwindigkeiten der Walzen kann das Material in der Längsrichtung verformt werden. Dies trägt zu einer optisch ansprechenden Musterung des Bodenbelags, insbesondere einer fein abgestuften Marmorierung, bei. Insbesondere lässt sich auf diese Weise eine richtungsorientierte Musterung erzielen.

Eine besonders bevorzugte Ausgestaltung der Erfindung sieht vor, dass die Oberfläche des bahnförmigen Bodenbelags strukturiert wird. Das Strukturieren kann z.B. mit einer strukturierten Walze beim Kalandrieren erfolgen. Das Strukturieren der Oberfläche kann den Eindruck einer marmorierten Oberfläche weiter unterstützen.

Erfindungsgemäß kann vorgesehen sein, dass die Herstellung des Zwischenprodukts und des zweiten Zwischenprodukts zeitlich getrennt durchgeführt wird. Hierbei kann das Zwischenprodukt zwischengelagert werden, bis das zweite Zwischenprodukt hergestellt wird.

Eine bevorzugte Ausgestaltung der Erfindung sieht vor, dass das Bodenbelagsmaterial wenigstens ein Elastomer und/oder ein thermoplastisches Elastomer aufweist. Vorzugsweise enthalten die erste, zweite und dritte Komponente jeweils ein vernetzungsfähiges Elastomer und/oder ein thermoplastisches Elastomer. Auch die ggf. vorhandene weitere Komponente (bzw. die weiteren Komponenten) können ein vernetzungsfähiges Elastomer und/oder ein thermoplastisches Elastomer aufweisen. Mit einem Elastomer lassen sich besonders ansprechende Musterungen des Bodenbelags erreichen. Darüber hinaus sind elastomere Bodenbeläge besonders haltbar und verschleißresistent. Das Elastomer wird vernetzt, nachdem das zweite Zwischenprodukt zu dem bahnförmigen Bodenbelag umgeformt wurde. Die Vernetzung kann als Vulkanisation, z.B. auf einer kontinuierlichen Vulkanisationsanlage (AUMA), unter Zufuhr von Wärme durchgeführt werden.

In vorteilhafter Weise umfasst das Elastomer einen oder mehrere Stoffe ausgewählt aus der Gruppe bestehend aus NR (Naturkautschuk), BR (Polybutadien), SBR (Styrol-Butadien-Kautschuk), NBR (Acrylnitril-Butadien-Kautschuk, EPM (Ethylen-Propylen-Kautschuk), EPDM (Ethylen-Propylen-Dien-Kautschuk), IIR (Butylkautschuk), CR (Chloroprenkautschuk), EVA (Ethylenvinylacetat) und IR (Polyisopren). Besonders bevorzugt sind dabei SBR, NBR, NR und EPDM sowie Mischungen hiervon.

Eine vorteilhafte Ausgestaltung sieht vor, dass die erste, zweite und dritte Komponente, abgesehen von gegebenenfalls unterschiedlichen Farben, eine übereinstimmende Zusammensetzung aufweisen. Vorzugsweise weist auch die weitere Komponente, abgesehen von der Farbe, die übereinstimmende Zusammensetzung auf.

Vorzugsweise wird der bahnförmige Bodenbelag zugeschnitten. Auf diese Weise kann der Bodenbelag als Rollenware oder als Bodenbelagsfliesen hergestellt werden.

Erfindungsgemäß ist bevorzugt, dass das Herstellen des Zwischenprodukts und/oder des zweiten Zwischenprodukts unter Zufuhr von Wärme erfolgt. Sofern Komponenten verwendet werden, die ein vernetzbares Elastomer enthalten, liegt der insoweit bevorzugte Temperaturbereich zwischen 60 °C und 100 °C. Bei diesem Temperaturbereich lässt sich eine optisch ansprechende Musterung, insbesondere eine Marmorierung erzielen.

Vorzugsweise ist die verwendete erste und zweite sowie die ggf. verwendete dritte und die weitere Komponente plastisch verformbar.

Beschrieben wird weiterhin ein gemusterter Bodenbelag hergestellt nach den vorliegend beschriebenen Verfahren.

Vorzugsweise weist der Bodenbelag an einer Sichtfläche, insbesondere der Oberseite, ein marmoriertes Muster auf. Das marmorierte Muster wird durch die erste und die zweite Grundfarbe sowie durch die erste und die zweite Mischfarbe gebildet. Sofern eine weitere Komponente verwendet wird, wird das marmorierte Muster zudem durch die weitere Grundfarbe gebildet. Auf diese Weise ergibt sich eine ansprechende Musterung mit einer abgestuften Marmorierung.

Es ist bevorzugt, dass der bahnförmige Bodenbelag eine Dicke zwischen 1 mm und 10 mm aufweist. Besonders bevorzugt liegt die Dicke zwischen 1mm und 5 mm.

Der bahnförmige Bodenbelag kann einschichtig oder mehrschichtig ausgebildet sein. Dabei wird wenigstens eine Schicht durch das umgeformte zweite Zwischenprodukt gebildet.

Weitere Ziele, Merkmale, Vorteile und Anwendungsmöglichkeiten der vorliegenden Erfindung ergeben sich aus der nachfolgenden Beschreibung von Ausführungsbeispielen sowie den Figuren.

Es zeigen:
- Fig. 1:: Eine schematische Darstellung des ersten Teils eines Verfahrens zur Herstellung eines gemusterten Bodenbelages;
- Fig. 2:: Den zweiten Teil des Verfahrens zur Herstellung eines gemusterten Bodenbelages.

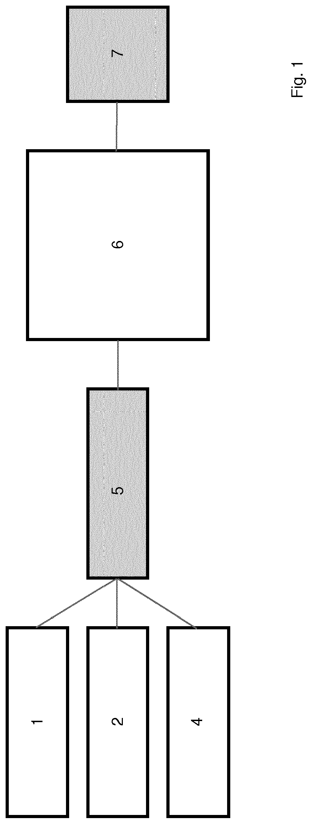

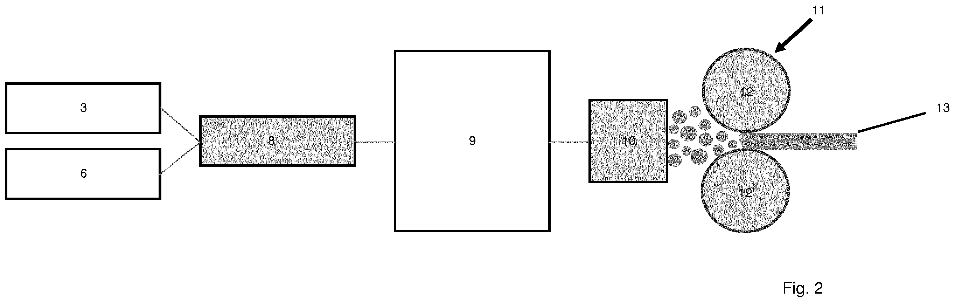

Figur 1 zeigt schematisch den ersten Teil des Ablaufs eines Verfahrens zur Herstellung eines gemusterten Bodenbelages. Es werden eine erste Komponente 1 und eine zweite Komponente 2 bereitgestellt. Bereitgestellt wird darüber hinaus eine dritte Komponente 3, welche in dem in Figur 2 beschriebenen zweiten Teil des Verfahrens verwendet wird. Figur 1 lässt weiterhin erkennen, dass in den dargestellten Ausführungsbeispielen eine weitere Komponente 4 bereitgestellt wird. Bei der ersten, zweiten, dritten und weiteren Komponente 1-4 handelt es sich um Materialien, die untereinander mischbar sind. Die erste Komponente 1 weist dabei eine erste Grundfarbe und die zweite Komponente 2 eine zweite Grundfarbe auf. Die dritte Komponente 3 weist eine dritte Grundfarbe auf, welche der ersten Grundfarbe entspricht. Erfindungsgemäß wird dabei bevorzugt, wenn die dritte Komponente 3 in ihrer Grundfarbe, aber auch in ihrer sonstigen Zusammensetzung der ersten Komponente 1 entspricht. Die weitere Komponente 4 weist eine weitere Grundfarbe auf. Die erste, zweite und weitere Grundfarbe sind jeweils verschieden. Bei dem dargestellten Ausführungsbeispiel ist vorgesehen, dass die zweite Grundfarbe dunkler ist als die erste Grundfarbe, während die weitere Grundfarbe heller ist als die erste Grundfarbe.

Da die Komponenten untereinander mischbar sind, kann beim Mischen der Komponenten eine Mischfarbe erzeugt werden.

Die Komponenten enthalten jeweils ein vernetzbares Elastomer. Insbesondere handelt es sich um Elastomermischungen.

In dem Ausführungsbeispiel ist vorgesehen, dass beim Herstellen des Zwischenproduktes eine Menge A der ersten Komponente, eine Menge B der zweiten Komponente und eine Menge E der weiteren Komponente zugegeben wird. Im dargestellten Ausführungsbeispiel macht die Menge A zwischen 80 Vol % und 120 Vol % der Menge B aus. Insbesondere kann vorgesehen sein, dass die Mengen A, B und E gleich groß sind und demzufolge die erste, zweite und die weitere Komponente 1, 2, 4 in gleichen Anteilen in die Mischeinrichtung 5 zugegeben werden.

Die erste, zweite und die weitere Komponente 1, 2, 4 werden in Form von Streifen bereitgestellt und in dieser Form der Mischeinrichtung 5 zugeführt. In der Mischeinrichtung 5 erfolgt ein Mischen der Komponenten zu dem Zwischenprodukt 6. Das Mischen erfolgt dabei derart, dass in dem Zwischenprodukt 6 erste Bereiche mit der ersten Grundfarbe, zweite Bereiche mit der zweiten Grundfarbe, dritte Bereiche mit einer ersten Mischfarbe und vierte Bereiche mit der weiteren Grundfarbe enthalten sind. Durch entsprechende Einstellung der Mischeinrichtung kann dabei erreicht werden, dass in dem Zwischenprodukt 6 die dritten Bereiche mit der ersten Mischfarbe zwischen 30 und 50 Vol % ausmachen. Beispielsweise kann die erste Mischfarbe 40 Vol % des Zwischenproduktes 6 ausmachen. Der erste Bereich, der zweite Bereich und der vierte Bereich können in dem Ausführungsbeispiel jeweils 20 Vol % des Zwischenproduktes 6 ausmachen.

Das Zwischenprodukt 6 kann beispielsweise als Streifen aus der Mischeinrichtung 5 abgegeben werden. Der Streifen kann in einem Granulator 7 zerkleinert werden. Der Granulator 7 kann insbesondere Messer zum Zerkleinern der Streifen und einen Sieb umfassen. Durch das Sieb wird erreicht, dass der Durchmesser der so erzeugten Granulate unter der Maschenweite des Siebes liegt.

Figur 2 zeigt den zweiten Teil des Verfahrens zur Herstellung des gemusterten Bodenbelages. Dieser zweite Teil kann unmittelbar im Anschluss an das Herstellen des Zwischenproduktes durchgeführt werden. Es ist aber auch möglich, das Zwischenprodukt zu lagern und zu einem späteren Zeitpunkt mit der Herstellung des zweiten Zwischenproduktes fortzufahren.

Figur 2 lässt erkennen, dass die zweite Mischeinrichtung 8 mit der dritten Komponente 3 sowie dem Zwischenprodukt 6 beschickt wird. Beim Herstellen des zweiten Zwischenproduktes wird eine Menge C der dritten Komponente 3 mit einer Menge D des Zwischenproduktes 6 in die zweite Mischeinrichtung 8 gegeben. Die Menge C liegt dabei in dem Ausführungsbeispiel zwischen 150 Vol % und 250 Vol % der Menge D. Beispielsweise kann die Menge C bei 200 % der Menge D liegen. Vorzugsweise wird die dritte Komponente 3 der zweite Mischeinrichtung 8 als Streifen und das Zwischenprodukt 6 als Granulat zugegeben.

In der zweiten Mischeinrichtung 8 erfolgt wiederum ein Mischen, um das zweite Zwischenprodukt 9 herzustellen. Die zweite Mischeinrichtung 8 ist dabei derart eingerichtet, dass das zweite Zwischenprodukt 9 erste Bereiche mit der ersten Grundfarbe, zweite Bereiche mit der zweiten Grundfarbe, dritte Bereiche mit der ersten Mischfarbe und vierte Bereiche mit der zweiten Mischfarbe aufweist. Darüber hinaus weist im dargestellten Ausführungsbeispiel das zweite Zwischenprodukt auch fünfte Bereiche mit der weiteren Grundfarbe auf. Beispielsweise können in dem zweiten Zwischenprodukt die Bereiche mit der zweiten Mischfarbe zwischen 30 Vol % und 70 Vol %, zum Beispiel 50 Vol %, ausmachen. Hierbei können im zweiten Produkt die ersten Bereiche mit der ersten Grundfarbe zwischen 20 Vol % und 40 Vol %, zum Beispiel 30 Vol % ausmachen. Die übrigen Bereiche des zweiten Zwischenprodukts verteilen sich auf die zweite Grundfarbe, die weitere Grundfarbe und die erste Mischfarbe. Beispielsweise können die Bereiche mit der zweiten und der weiteren Grundfarbe jeweils 5 % und der Bereich mit der ersten Mischfarbe 10 % ausmachen.

Indem das zweite Zwischenprodukt durch beispielsweise eine Lochscheibe aus der zweiten Mischeinrichtung 8 abgegeben und in kurzen Abständen die austretende Masse zerteilt wird, können Chips aus dem zweiten Zwischenprodukt hergestellt werden.

Das zweite Zwischenprodukt 9 wird dann zu einem bahnförmigen Bodenbelag 13 weiterverarbeitet. Hierbei wird das zweite Zwischenprodukt 9 umgeformt. Im dargestellten Ausführungsbeispiel wird das zweite Zwischenprodukt 9 in einer Zerkleinerungseinrichtung 10 zu Chips zerkleinert. Die Zerkleinerungseinrichtung 10 kann z.B. ein Abschlagmesser umfassen. Die Chips des zweiten Zwischenprodukts werden dann durch Kalandrieren in einer Kalanderanlage 11 umgeformt. Die Kalanderanlage 11 weist ein Kalanderwalzenpaar mit einer ersten Kalanderwalze 12 und einer zweiten Kalanderwalze 12' auf. Durch die Kalanderwalzen 12, 12' wird das zweite Zwischenprodukt 9 verdichtet und zu einer Bahn 13 geformt. Gegebenenfalls können bei der Herstellung der Bahn mehrere hintereinander angeordnete Kalanderwalzen vorgesehen werden. Im dargestellten Ausführungsbeispiel wird das zweite Zwischenprodukt 9 im Anschluss an das Mischen in der Kalanderanlage 11 weiterverarbeitet. Es ist aber auch möglich, das zweite Zwischenprodukt 9 zwischenzulagern und zu einem späteren Zeitpunkt weiterzuverarbeiten.

Im beschriebenen Ausführungsbeispiel entsteht auf diese Weise eine Bahn, welche vernetzbares Elastomer enthält. Indem das vernetzbare Elastomer vernetzt wird, kann ein haltbarer Bodenbelag erhalten werden. Das Vernetzen kann beispielsweise in einer Vulkanisationsanlage (z.B. AUMA) unter Zufuhr von Wärme und Druck erfolgen.

In dem dargestellten Ausführungsbeispiel wird die erste Kalanderwalze 12 mit einer ersten Umfangsgeschwindigkeit V1 und die zweite Kalanderwalze 12' mit einer zweiten Umfangsgeschwindigkeit V2 gegensinnig bewegt. Die Umfangsgeschwindigkeit V1 liegt dabei über der Umfangsgeschwindigkeit V2. Durch die unterschiedlichen Umfangsgeschwindigkeiten der Walzen 12, 12' wird das Material in Längsrichtung verformt. Auf diese Weise können die im zweiten Zwischenprodukt 9 enthaltenen Bereiche mit unterschiedlichen Farben so verzogen werden, dass eine besonders fein abgestufte Marmorierung entsteht.

Die Mischeinrichtung und die zweite Mischeinrichtung können jeweils als ein Extruder ausgebildet sein. Insbesondere eignen sich sogenannten Stiftextruder. Durch die Stifte kann der Grad der Durchmischung des Materials beim Durchtritt durch die als Extruder 5, 8 ausgebildeten Mischeinrichtungen gesteuert werden. Auf diese Weise kann die gewünschte Optik des gemusterten Bodenbelages erhalten werden.

## Patentansprüche

1. Verfahren zur Herstellung eines gemusterten Bodenbelags (13) mit folgenden Schritten:
- Bereitstellen einer ersten Komponente (1) und einer zweiten Komponente (2), wobei die erste und zweite Komponente (3) mischbar sind und wobei die erste Komponente (1) eine erste Grundfarbe und die zweite Komponente (2) eine zweite Grundfarbe aufweist;
- Herstellen eines ersten Zwischenproduktes (6) durch Mischen der ersten Komponente (1) und der zweiten Komponente (2) in einer ersten Mischeinrichtung (5), wobei das Mischen derart erfolgt, dass das erste Zwischenprodukt (6) erste Bereiche mit der ersten Grundfarbe, zweite Bereiche mit der zweiten Grundfarbe und dritte Bereiche mit einer ersten Mischfarbe aufweist;
- Bereitstellen einer dritten Komponente (3);
- Weiterverarbeiten des ersten Zwischenproduktes (6) zu einem bahnförmigen Bodenbelag (13),
**dadurch gekennzeichnet, dass** beim Weiterverarbeiten des ersten Zwischenproduktes (6) zunächst ein zweites Zwischenprodukt (9) hergestellt wird durch Mischen des ersten Zwischenproduktes (6) mit der dritten Komponente (3) in einer zweiten Mischeinrichtung (8), wobei das zweite Zwischenprodukt (9) erste Bereiche mit der ersten Grundfarbe, zweite Bereiche mit der zweiten Grundfarbe, dritte Bereiche mit der ersten Mischfarbe und vierte Bereiche mit einer zweiten Mischfarbe aufweist.

2. Verfahren nach Anspruch 1, **dadurch gekennzeichnet, dass** beim Herstellen des ersten Zwischenproduktes (6) eine Menge A der ersten Komponente (1) und eine Menge B der zweiten Komponente (2) in die erste Mischeinrichtung (5) gegeben wird, wobei die Menge A zwischen 50 Vol % und 150 Vol % der Menge B ausmacht.

3. Verfahren nach Ansprüche 1 oder 2, **dadurch gekennzeichnet, dass** in dem ersten Zwischenprodukt (6) die dritten Bereiche mit der ersten Mischfarbe zwischen 30 Vol % und 50 Vol % ausmachen.

4. Verfahren nach einem der Ansprüche 1 bis 3, **dadurch gekennzeichnet, dass** das erste Zwischenprodukt (6) nach dem Mischen in einem Granulator (7) granuliert wird.

5. Verfahren nach einem der Ansprüche 1 bis 4, **dadurch gekennzeichnet, dass** der Farbabstand dE zwischen der ersten Grundfarbe und der zweiten Mischfarbe ermittelt nach DIN 6176 zwischen 1,0 und 5,0 liegt.

6. Verfahren nach einem der Ansprüche 1 bis 5, **dadurch gekennzeichnet, dass** die dritte Komponente (3) eine dritte Grundfarbe aufweist.

7. Verfahren nach einem der Ansprüche 1 bis 6, **dadurch gekennzeichnet, dass** beim Herstellen des zweiten Zwischenproduktes (9) eine Menge C der dritten Komponente (3) und eine Menge D des ersten Zwischenproduktes (6) zugegeben wird, wobei die Menge C zwischen 150 Vol % und 250 Vol % der Menge D ausmacht.

8. Verfahren nach einem der Ansprüche 1 bis 7, **dadurch gekennzeichnet, dass** in dem zweiten Zwischenprodukt (9) die vierten Bereiche mit der zweiten Mischfarbe zwischen 30 Vol % und 70 Vol % ausmachen.

9. Verfahren nach einem der Ansprüche 1 bis 8, **dadurch gekennzeichnet, dass** in dem zweiten Zwischenprodukt (9) die ersten Bereiche mit der ersten Grundfarbe zwischen 20 Vol % und 40 Vol % ausmachen.

10. Verfahren nach einem der Ansprüche 1 bis 9, **dadurch gekennzeichnet, dass** wenigstens eine weitere Komponente (4) mit wenigstens einer weiteren Grundfarbe bereitgestellt wird, wobei beim Herstellen des ersten Zwischenproduktes (6) und/oder beim Herstellen des zweiten Zwischenproduktes (9) zusätzlich die weitere Komponente (4) zu der ersten Mischeinrichtung (5) bzw. zu der zweiten Mischeinrichtung (8) zugegeben wird.

11. Verfahren nach einem der Ansprüche 1 bis 10, **dadurch gekennzeichnet, dass** die erste Mischeinrichtung (5) und/oder die zweite Mischeinrichtung (8) als Extruder ausgebildet sind.

12. Verfahren nach einem der Ansprüche 1 bis 11, **dadurch gekennzeichnet, dass** das Weiterverarbeiten zu einem bahnförmigen Bodenbelag ein Kalandrieren in einer Kalanderanlage (11) umfasst.

13. Verfahren nach Anspruch 12, **dadurch gekennzeichnet, dass** die Kalanderanlage (11) ein Kalanderwalzenpaar mit einer ersten und einer zweiten Kalanderwalze (12, 12') aufweist, wobei die erste Kalanderwalze (12) mit einer ersten Umfagsgeschwindigkeit V1 und die zweite Kalanderwalze (12') mit einer zweiten Umfangsgeschwindigkeit V2 bewegt wird, und dass die erste Umfangsgeschwindigkeit V1 mehr als 110% der zweiten Umfangsgeschwindigkeit V2 beträgt.

## Claims

1. Method for manufacturing a patterned floor covering (13), comprising the following steps:
- providing a first component (1) and a second component (2), the first and second component (3) being mixable and the first component (1) having a first base color and the second component (2) having a second base color;
- manufacturing a first intermediate product (6) by mixing the first component (1) and the second component (2) in a mixing device (5), the mixing taking place in such a way that the first intermediate product (6) comprises first regions having the first base color, second regions having the second base color and third regions having a first mixed color;
- providing a third component (3);
- further processing the first intermediate product (6) into a web-shaped floor covering (13),
**characterized in that** during the further processing of the first intermediate product (6), a second intermediate product (9) is manufactured by mixing the intermediate product (6) with the third component (3) in a second mixing device (8), the second intermediate product (9) comprising first regions having the first base color, second regions having the second base color, third regions having the first mixed color and fourth regions having a second mixed color.

2. Method according to claim 1, **characterized in that** during the manufacture of the first intermediate product (6), an amount A of the first component (1) and an amount B of the second component (2) are fed into the mixing device (5), amount A making up between 50 vol% and 150 vol% of amount B.

3. Method according to either claim 1 or claim 2, **characterized in that**, in the first intermediate product (6), the third regions having the first mixed color make up between 30 vol% and 50 vol%.

4. Method according to any of claims 1 to 3, **characterized in that** the first intermediate product (6) is granulated in a granulator (7) after the mixing.

5. Method according to any of claims 1 to 4, **characterized in that** the color distance dE between the first base color and the second mixed color as determined in accordance with DIN 6176 is between 1.0 and 5.0.

6. Method according to any of claims 1 to 5, **characterized in that** the third component (3) has a third base color.

7. Method according to any of claims 1 to 6, **characterized in that**, during the manufacture of the second intermediate product (9), an amount C of the third component (3) and an amount D of the first intermediate product (6) are added, amount C making up between 150 vol% and 250 vol% of amount D.

8. Method according to any of claims 1 to 7, **characterized in that**, in the second intermediate product (9), the fourth regions having the second mixed color make up between 30 vol% and 70 vol%.

9. Method according to any of claims 1 to 8, **characterized in that**, in the second intermediate product (9), the first regions having the first base color make up between 20 vol% and 40 vol%.

10. Method according to any of claims 1 to 9, **characterized in that** at least one further component (4) having at least one further base color is provided, the further component (4) being additionally fed to the mixing device (5) or to the second mixing device (8) during the manufacture of the first intermediate product (6) and/or during the manufacture of the second intermediate product (9).

11. Method according to any of claims 1 to 10, **characterized in that** the mixing device (5) and/or the second mixing device (8) are extruders.

12. Method according to any of claims 1 to 11, **characterized in that** the further processing into a web-shaped floor covering comprises calendering in a calendering system (11).

13. Method according to claim 12, **characterized in that** the calendering system (11) comprises a pair of calender rollers having a first and a second calender roller (12, 12'), the first calender roller (12) being moved at a first circumferential speed V1 and the second calender roller (12') being moved at a second circumferential speed V2, and **in that** the first circumferential speed V1 is more than 110 % of the second circumferential speed V2.

## Revendications

1. Procédé de fabrication d'un revêtement de sol (13) à motifs avec les étapes suivantes :
- fourniture d'un premier composant (1) et d'un deuxième composant (2), dans lequel les premier et deuxième composants (3) sont miscibles et dans lequel le premier composant (1) présente une première couleur de base et le deuxième composant (2) présente une deuxième couleur de base ;
- production d'un premier produit intermédiaire (6) par mélange du premier composant (1) et du deuxième composant (2) dans un premier dispositif mélangeur (5), dans lequel le mélange s'effectue de telle sorte que le premier produit intermédiaire (6) présente des premières zones avec la première couleur de base, des deuxièmes zones avec la deuxième couleur de base et des troisièmes zones avec une première couleur mélangée ;
- fourniture d'un troisième composant (3) ;
- transformation du premier produit intermédiaire (6) en un revêtement de sol en forme de bande (13),
**caractérisé en ce que** lors de la transformation du premier produit intermédiaire (6), un deuxième produit intermédiaire (9) est ensuite produit par mélange du premier produit intermédiaire (6) avec le troisième composant (3) dans un deuxième dispositif mélangeur (8), dans lequel le deuxième produit intermédiaire (9) présente des premières zones avec la première couleur de base, des deuxièmes zones avec la deuxième couleur de base, des troisièmes zones avec la première couleur mélangée et des quatrièmes zones avec une deuxième couleur mélangée.

2. Procédé selon la revendication 1, **caractérisé en ce que** lors de la production du premier produit intermédiaire (6), une quantité A du premier composant (1) et une quantité B du deuxième composant (2) sont introduites dans le premier dispositif mélangeur (5), dans lequel la quantité A représente entre 50 % en volume et 150 % en volume de la quantité B.

3. Procédé selon la revendication 1 ou 2, **caractérisé en ce que** dans le premier produit intermédiaire (6), les troisièmes zones avec la première couleur mélangée représentent entre 30 % en volume et 50 % en volume.

4. Procédé selon l'une des revendications 1 à 3, **caractérisé en ce que** le premier produit intermédiaire (6) est, après le mélange, granulé dans un granulateur (7).

5. Procédé selon l'une des revendications 1 à 4, **caractérisé en ce que** l'écart de couleur dE entre la première couleur de base et la deuxième couleur mélangée, déterminé selon la norme DIN 6176, est compris entre 1,0 et 5,0.

6. Procédé selon l'une des revendications 1 à 5, **caractérisé en ce que** le troisième composant (3) présente une troisième couleur de base.

7. Procédé selon l'une des revendications 1 à 6, **caractérisé en ce que** lors de la production du deuxième produit intermédiaire (9), une quantité C du troisième composant (3) et une quantité D du premier produit intermédiaire (6) sont ajoutées, dans lequel la quantité C représente entre 150 % en volume et 250 % en volume de la quantité D.

8. Procédé selon l'une des revendications 1 à 7, **caractérisé en ce que** dans le deuxième produit intermédiaire (9), les quatrièmes zones avec la deuxième couleur mélangée représentent entre 30 % en volume et 70 % en volume.

9. Procédé selon l'une des revendications 1 à 8, **caractérisé en ce que** dans le deuxième produit intermédiaire (9), les premières zones avec la première couleur de base représentent entre 20 % en volume et 40 % en volume.

10. Procédé selon l'une des revendications 1 à 9, **caractérisé en ce qu'**au moins un composant supplémentaire (4) est fourni avec au moins une couleur de base supplémentaire, dans lequel lors de la production du premier produit intermédiaire (6) et/ou lors de la production du deuxième produit intermédiaire (9), le composant supplémentaire (4) est en outre ajouté dans le premier dispositif mélangeur (5) ou respectivement dans le deuxième dispositif mélangeur (8).

11. Procédé selon l'une des revendications 1 à 10, **caractérisé en ce que** le premier dispositif mélangeur (5) et/ou le deuxième dispositif mélangeur (8) sont réalisés comme extrudeuses.

12. Procédé selon l'une des revendications 1 à 11, **caractérisé en ce que** la transformation en un revêtement de sol en forme de bande comprend un calandrage dans une installation de calandrage (11).

13. Procédé selon la revendication 12, **caractérisé en ce que** l'installation de calandrage (11) présente au moins une paire de rouleaux de calandrage avec un premier et un deuxième rouleau de calandrage (12, 12'), dans lequel le premier rouleau de calandrage (12) est déplacé à une première vitesse circonférentielle V1 et le deuxième rouleau de calandrage (12') est déplacé à une deuxième vitesse circonférentielle V2, et **en ce que** la première vitesse circonférentielle V1 vaut plus de 110 % de la deuxième vitesse circonférentielle V2.
